# EUROPÄISCHE PATENTANMELDUNG

(11) **EP 0 761 079 A1**
(43) Veröffentlichungstag der Anmeldung: **12.03.1997**
(21) Anmeldenummer: 96111180.4
(22) Anmeldetag: 11.07.1996
(51) Int. Cl.: A01B 33/14

(54) **Bodenbearbeitungsmaschine**

(30) Priorität: 01.09.1995 DE 29514041 U
(71) Anmelder: Rabewerk GmbH + Co., 49152 Bad Essen (DE)
(72) Erfinder: Warnking, Richard, Dipl.-Ing., 49152 Bad Essen (DE)
(74) Vertreter: Missling, Arne, Dipl.-Ing.

(57) **Zusammenfassung**

Bei Bodenbearbeitungsmaschinen mit Werkzeugkreiseln (W) müssen die Kreiselzinken (2) aus unterschiedlichen Gründen häufig auf dem Feld ausgewechselt werden. Um das ohne Spezialwerkzeuge und in kurzer Zeit besorgen zu können, können gemäß der Erfindung die an den Kreiselzinken (2) abgewinkelten, an einem Werkzeugträger (T) der jeweiligen Bodenbearbeitungsmaschine anzubringenden Halteteile (1) mittels eines reinen Formschlusses angebracht werden, wobei die Arretierung durch Haltebolzen (3) erfolgt, welche die Halteteile (1) unterfangen und die allein einer Beanspruchung auf Abscheren unterliegen, so daß ihre axiale Lagesicherung leicht lösbar ist. Zusätzlich können diese auch formschlüssig am Werkzeugträger (T) angebracht werden.

## Beschreibung

Die Erfindung betrifft eine Bodenbearbeitungsmaschine mit einem quer zur Fahrtrichtung angeordneten Getriebegehäuse für den Antrieb einer Vielzahl von nebeneinander in einer Reihe befindlichen Werkzeugkreiseln mit nach unten gerichteten Kreiselzinken, die mit einem an den Kreiselzinken ausgebildeten, ihnen gegebenenfalls gemeinsamen Halteteil an einem mit einer Antriebswelle für den jeweiligen Werkzeugkreisel drehfest verbundenen, flanschartigen Werkzeugträger auswechselbar befestigt sind, wobei die Halteteile an einer ebenen Stirnfläche des Werkzeugträgers, vorzugsweise unmittelbar, anliegen.

Für den rationellen Betrieb einer solchen Bodenbearbeitungsmaschine ist es wichtig, daß die Kreiselzinken während des laufenden Feldbetriebes leicht und schnell ausgewechselt werden können und daß sie bei Überlastung nicht verbiegen oder brechen können. Eine Auswechselung kann sich erforderlich machen, wenn einzelne Kreiselzinken beschädigt oder abgenutzt sind; es kann aber auch sein, daß ein ganzer Satz von Kreiselzinken gegen einen anderen ausgetauscht werden muß, wenn die Art der Bodenbearbeitung oder die Bodenbeschaffenheit dies erfordern. Die Anordnung muß demzufolge so getroffen sein, daß der Fahrzeugführer selbst die Umrüstung vor Ort vornehmen kann. Spezielle Werkzeuge oder eine besondere Handfertigkeit dürfen dafür nicht vorausgesetzt werden, und auch das während der Bodenbearbeitung unvermeidliche Anhaften von Erdreich an dem Werkzeugkreisel soll dabei eine Auswechselung der Kreiselzinken nicht behindern.

Die Befestigung der Kreiselzinken muß außerdem auch sehr sicher ausfallen, um Schäden oder Gefahren durch sich lösende Kreiselzinken zu vermeiden. Gleichwohl ist eine absolut starre Ausbildung einer solchen Befestigung nicht erwünscht. Vielmehr ist es zweckmäßig, wenn sowohl der Korpus des Kreiselzinkens selbst als auch das an diesem ausgebildete Halteteil unter Belastung zumindest geringfügig elastisch ausweichen können; beim Auftreffen des Kreiselzinkens auf einen erhöhten Bodenwiderstand, beispielsweise einen Stein im Erdreich, kann auf diese Weise einer Bruchgefahr an dem Korpus des Kreiselzinkens begegnet werden.

Es ist seit langem bekannt, die Kreiselzinken mittels Schraubverbindungen an dem Werkzeugträger zu befestigen. Zu diesem Zweck können, wie beispielsweise in der Offenlegungsschrift DE 33 45 774 A1 beschrieben, die Kreiselzinken direkt oder mittels spezieller Werkzeughalter an dem Werkzeugträger befestigt werden. Die Befestigung erfolgt dabei mittels aufwendiger, die Verbindungsteile spannender Schraubverbindungen, die sehr stabil ausgeführt sein müssen, weil sie der an den Kreiselzinken während des Betriebs angreifenden Belastung in hohem Maße ausgesetzt sind. Eine elastische Federung im Bereich der Einspannung der Kreiselzinken an dem Werkzeugträger ist dadurch ausgeschlossen; trifft ein Kreiselzinken auf einen außergewöhnlichen Bodenwiderstand, kann ein Schaden allenfalls in begrenztem Umfang durch die Eigenfederung des von der Einspannung frei nach unten abragenden Korpus des Kreiselzinkens vermieden werden. Wird bei einer solchen Anordnung der Kreiselzinken direkt mit einem an ihm ausgebildeten Halteteil an dem Werkzeugträger befestigt, dann erfordern die vorgesehenen Schraubverbindungen zudem Bohrungen in dem Halteteil, die diesen hochbelasteten Bereich schwächen. Andererseits ist der Aufwand ganz erheblich, wenn man stattdessen den Kreiselzinken ungeschwächt mittels eines speziellen Werkzeughalters an dem Werkzeugträger befestigt, in dem der Kreiselzinken beispielsweise verstiftet oder axial verschraubt werden kann, so daß eine Störung des Zinkenquerschnittes geringfügig gehalten kann.

Die Anzahl der Schraubverbindungen zur Befestigung der Kreiselzinken ist demgegenüber in einer Anordnung wesentlich reduziert, wie sie in der Offenlegungsschrift DE 41 06 181 A1 beschrieben ist; stattdessen werden nun die Kreiselzinken mittels Klemmplatten direkt an der Antriebswelle befestigt, zwischen denen Halteteile der Kreiselzinken ungeschwächt eingespannt werden. Die Auswechselung der Kreiselzinken ist jedoch nach wie vor umständlich, weil eine gesicherte, auch bei dieser Anordnung hochbelastete Schraubverbindung gelöst werden muß, die unter Last zum Verklemmen neigt und ihrer Auflösung gegebenenfalls erheblichen Widerstand entgegensetzt, so daß ein Wechsel der Kreiselzinken noch schwieriger und zeitraubender wird. Die Schraubverbindung ist hier oberhalb des Getriebegehäuses vorgesehen.

Im Gegensatz dazu ist es auch bereits bekannt, die Schraubverbindung auf der Seite des Werkzeugträgers anzubringen, wie das beispielsweise in dem Gebrauchsmuster DE 90 06 000 U1 vorgeschlagen worden ist. Auch hierbei kommt man zwar wiederum mit ungeschwächten Halteteilen aus; die oben beschriebenen Nachteile treten aber nach wie vor auf. Hinzu kommt, daß hier die Schraubverbindung während des Betriebes dem aufgewirbelten, feuchten Erdreich unmittelbar ausgesetzt und die Gefahr noch größer ist, daß diese Schraubverbindung festrostet.

Eine wesentliche Entlastung der erforderlichen Schraubverbindungen kann offenbar herbeigeführt werden, wenn entsprechend der Patentanmeldung EP 0 211 276 A2 axial gerichtete Aufnahmeöffnungen in den Werkzeugträgern vorgesehen werden, in denen die Halteteile der Kreiselzinken einschiebbar sind; die Anordnung kann so getroffen werden, daß die Schraubverbindungen nur noch die radiale Bewegung der Halteteile verhindern müssen, so daß auch einfache Bolzenverbindungen verwendet werden können. Dazu werden zur Achse der Antriebswelle parallel einsetzbare Bolzenschrauben oder dergleichen verwendet, die entsprechend gerichtete Bohrungen in dem Werkzeugträger durchdringen. Die Herstellung der taschenartigen Aufnahmeöffnungen bereitet allerdings erhebliche Schwierigkeiten; in der Regel werden sie durch eine Eintiefung in der Stirnfläche des Werkzeugträgers und dort angeschweißte, die Eintiefungen überbrückende Platten ausgeformt, so daß ein erheblicher Aufwand erforderlich ist. Es ist auch nach wie vor nicht zu umgehen, daß die Halteteile zumindest partiell verschwächt werden müssen, um einen Formschluß in deren Längsrichtung an den Bolzenschrauben zu realisieren. Da es sich bei den Kreiselzinken um geschmiedete Bauteile handelt, bedeutet eine wenn auch geringfügige mechanische Zerspanung eine Störung der homogenen Oberfläche; an diesen Stellen besteht Bruchgefahr. Außerdem verschleißen die Taschen (Aufnahmeöffnungen) durch ständige Reibung, so daß der Zinkenhalter dann auszutauschen ist.

Die Halteteile der Kreiselzinken können im übrigen auch nichtfluchtend übereinander an dem Werkzeugträger vorgesehen sein, wie das in der Patentschrift GB 1 364 466 gezeigt ist; bei dieser Ausführung ist allerdings wiederum eine hochbelastete Schraubverbindung zur Befestigung an dem Werkzeugträger verwendet worden.

In der Regel ist jeder der Werkzeugträger mit zwei Kreiselzinken bestückt, die mit je einem separaten Halteteil befestigt sind. In der Patentanmeldung EP 0 407 723 A1 ist gezeigte daß es auch denkbar ist, die Kreiselzinken mittels eines gemeinsamen Halteteiles anzubringen - hierbei ist in jedem Fall eine Durchbrechung dieses gemeinsamen Halteteiles erforderlich, wenn es mittels einer Schraubverbindung an dem Werkzeugträger eingespannt wird.

Die Erfindung hat sich die Aufgabe gestellt, eine Bodenbearbeitungsmaschine der eingangs näher bezeichneten Art so auszubilden, daß die Kreiselzinken schnell und sicher ausgewechselt werden können und die dabei verwendeten Verbindungselemente im Betrieb lediglich so beansprucht werden, daß auf hochfeste, von den Kreiselzinken während des Betriebes belastete Schraubverbindungen verzichtet werden und daß weiterhin die Befestigung der Kreiselzinken an dem Werkzeugträger auch mit ungeschwächten Halteteilen erfolgen kann. Darüber hinaus soll es ohne großen Aufwand möglich sein, daß der Kreiselzinken an dem Werkzeugträger federnd angebracht ist, um einer Bruchgefahr beim Auftreffen auf Steine und ähnlichen Bodenwiderständen zu begegnen sowie die Bodenbearbeitung zu verbessern.

Mit der Erfindung wird eine einfache und sichere Montage und/oder Demontage der Kreiselzinken ohne Spezialwerkzeuge, eine effektive Bruchsicherung von Kreiselzinken und Kreiselzinkenhalter, eine deutliche Minderung (durch elastische Kreiselzinkenanbringung) der sich ins Getriebe fortsetzenden Arbeitsstöße, ein längerer Federweg des Kreiselzinkens, eine Eliminierung von (zu Brüchen führenden) Schwachstellen durch Bohrungen o.ä., eine Vermeidung (durch gleichzeitig als Abschersicherung dienenden Haltebolzen) einer Beschädigung der Kreiselzinken bei Überlastung sowie eine günstige Krafteinleitung in Kreiselzinken und Werkzeugträger erreicht.

Erfindungsgemäß wird die Aufgabe mit den Merkmalen des Anspruches 1 gelöst.

Bei einer solchen Ausführung haben die Haltestücke zunächst die Aufgabe, die Halteteile der Kreiselzinken in einer ersten, senkrecht zu der Hauptachse des Werkzeugträgers verlaufenden Richtung an dem Werkzeugträger festzulegen; sie dienen aber darüber hinaus auch noch als Lager für die Halteelemente, deren Längsachsen demzufolge nicht parallel zu der Hauptachse des Werkzeugträgers, sondern ebenfalls senkrecht dazu gerichtet sind. Auf diese Weise sind die Halteteile in einer zweiten, zu der Hauptachse des Werkzeugträgers parallelen Richtung ebenfalls festgelegt; die Halteelemente werden allein auf Abscheren in den Lagern der Haltestücke belastet. Schließlich sind die Halteteile in der verbleibenden, auf der ersten und zweiten Richtung senkrechten dritten Richtung durch die Arretierstücke endgültig fixiert, die relativ beliebig vorgesehen sein können; ihre Funktion kann auch von den Haltestücken wahrgenommen werden. Die Halteteile können nunmehr ungeschwächt bleiben; selbstverständlich bleibt es gleichwohl unbenommen, an den Halteteilen Durchbrechungen anzubringen, die in Verbindung mit passenden Arretierstücken der Fixierung dienen.

Die Haltestücke können sehr einfach gehalten und mit wenig Aufwand an dem Werkzeugträger ausgebildet sein, wie im einzelnen noch zu zeigen sein wird. Andererseits hält sich auch die abscherende Beanspruchung der Halteelemente in Grenzen, denn die vom Erdreich ausgeübte Hauptlast ist während des Betriebes auf die Stirnfläche des Werkzeugträgers hin gerichtet. Die Anordnung verträgt dabei trotzdem plötzlich auftretende erhöhte Lasten an den Kreiselzinken, weil die Halteteile nicht allseits umfassend und starr eingespannt sind, sondern stattdessen mit den Halteelementen eine einfache Kantenanlage bilden, so daß insbesondere derjenige Bereich des Kreiselzinkens, in welchem dessen nach unten gerichteter Korpus in das etwa waagerechte Halteteil übergeht, bis hin zu der an dem Halteelement ausgebildeten Anlagekante zurückfedern kann.

Die Auswechselung der Kreiselzinken ist denkbar einfach; dazu müssen lediglich die Halteelemente entfernt und nach dem Auswechseln der Kreiselzinken wieder eingesetzt werden. Spezialwerkzeuge oder eine besondere Handfertigkeit sind dazu nicht notwendig. Die Halteelemente sind währenddessen ständig entlastet und an den Haltestücken deshalb ohne Kraftaufwand bewegbar, wenn ihre axiale Lagesicherung entfernt ist.

Es ist zweckmäßig, wenn an dem Werkzeugträger zwei spiegelbildlich zueinander liegende Kreiselzinken vorgesehen sind. Sie bilden in der Regel getrennte Bauteile, die jeweils mit einem Halteteil versehen sind. Stattdessen ist es aber auch möglich, daß die Kreiselzinken mit einem gemeinsamen, an der Stirnfläche des Werkzeugträgers anliegenden Halteteil versehen sind, insbesondere, wenn leichtere Böden zu bearbeiten sind und deshalb die Belastung des Halteteiles geringer ist; auf diese Weise muß an jedem Werkzeugträger nur noch ein einziges Bauteil befestigt und ausgewechselt werden.

Unabhängig davon können die Halteteile sowohl mit jeweils zueinander parallelen, geradlinigen Längsseiten versehen sein als auch solche Längsseiten aufweisen, die zumindest in Teilbereichen gebrochen und/oder winklig zueinander ausgebildet sind. Man kommt hierbei ohne Arretierstücke aus, deren Funktion von den die Längsseiten flankierenden Haltestücken mit wahrgenommen wird.

Die Halteteile können als flache, im Querschnitt vorzugsweise rechteckige Bänder, aber auch als im Querschnitt vorzugsweise kreisförmige Bolzen ausgebildet sein, so daß die erfindungsgemäße Anordnung bei ganz unterschiedlichen Kreiselzinken zum Zuge kommen kann. Dabei ist es ganz bemerkenswert, daß für die bolzenförmigen Halteteile keine besonderen Vorkehrungen getroffen werden müssen, um eine Verdrehung um ihre Achse zu verhindern. Es genügt beispielsweise, wenn ihre freien Endstücke nochmals (eventuell auch mehrmals) abgebogen und an dem Werkzeugträger in geeigneter Weise arretiert werden. Im einfachsten Falle ist dabei das zugehörige Arretierstück als Ausnehmung in dem Werkzeugträger ausgebildet, in welchem das freie Ende des Halteteiles versenkt ist, wenn dieses in seiner Lage fixiert wurde.

Es ist erfindungsgemäß möglich, die Halteteile in ganz verschiedener Weise von dem Korpus des Kreiselzinkens abzuwinkeln. So können die Halteteile jeweils von dem zugehörigen Kreiselzinken um etwa 90° abgebogen sein in der Weise, daß ihre Endstücke aufeinander zu gerichtet sind, wenn die Halteteile an der Stirnfläche des Werkzeugträgers befestigt sind; eine solche Ausführung ist auch vorteilhaft, wenn zwei Kreiselzinken mit einem gemeinsamen Halteteil verbunden sind. Stattdessen kann die Anordnung aber auch so ausgeführt sein, daß die Halteteile jeweils von dem zugehörigen Kreiselzinken um etwa 90° und ihre Endstücke danach nochmals um etwa 90° abgebogen sind in der Weise, daß die Endstücke zusammen mit den Halteelementen und/oder dem Werkzeugträger einen Formschluß in der Richtung der Längsseiten der Halteteile bewirken, wenn die Halteelemente in den Haltestücken angebracht sind. Hier haben dementsprechend die Endstücke der Halteteile die Funktion der Arretierstücke. Besonders gute Federeigenschaften hat eine weitere erfindungsgemäße Ausbildung der Halteteile, bei der diese jeweils von dem zugehörigen Kreiselzinken um etwa 90° und danach nochmals um etwa 180° abgebogen sind in der Weise, daß ihre Endstücke voneinander weg weisen, wenn die Halteteile an der Stirnfläche des Werkzeugträgers befestigt sind.

Die Halteelemente können jeweils als glatter, mittels Querstiften in den Haltestücken arretierbarer, vorzugsweise zylindrischer Schaft oder als Schraubverbindung ausgebildet sein. In beiden Fällen ist es auch möglich, daß an den Halteelementen ein Kopfstück, beispielsweise ein Bolzen- oder Schraubenkopf, ausgebildet ist, das an einem der Haltestücke anliegt, so daß das Halteelement nur auf einer Seite verstiftet oder in anderer vergleichbarer Weise axial lagegesichert werden muß. Bei einer Schraubverbindung erfolgt diese axiale Fixierung mittels einer Mutter, die gegebenenfalls ihrerseits gegen Lösung gesichert ist.

Im Rahmen der Erfindung können die Arretierstücke in vielfältiger Weise ausgebildet sein, soweit ihre Aufgaben nicht bereits von einem Haltestück oder dem Halteteil mit wahrgenommen werden. So ist es möglich, an dem Halteteil mindestens eine Durchbrechung vorzusehen, die ein komplementäres, an der Stirnfläche des Werkzeugträgers befindliches, vorzugsweise zapfenartigen Arretierstück untergreift, wenn die Halteelemente in den Haltestücken angebracht sind. Insbesondere bei bolzenartigen Halteteilen kann die Durchbrechung wie oben bereits beschrieben auch in dem Werkzeugträger vorgesehen und das zapfenartige Arretierstück von dem Endstück des Halteteiles abgebogen sein.

Stattdessen können auch in einer besonders bevorzugten Ausführung an dem Halteteil auf der dem Halteelement zugewandten Haltefläche quer zu den Längsseiten des Halteteiles verlaufende, erhabene, rippenartige, parallele Arretierstücke vorgesehen sein. Bei dieser Ausführung kommt man auch bei bandartigen Halteteilen ohne eine Störung der Oberfläche des Halteteiles aus, wenn beispielsweise die Arretierstücke entsprechend als Sicken in das Halteteil eingeprägt werden, so daß die Oberfläche nicht spanend aufgerissen wird.

Die Halteteile müssen an dem Werkzeugträger nicht notwendig zueinander fluchtend angeordnet sein. Vielmehr können die Halteteile, die nach wie vor jeweils von dem zugehörigen Kreiselzinken um etwa 90° abgebogen sind in der Weise, daß ihre Endstücke gegeneinander gerichtet sind, wenn die Halteteile an der Stirnfläche des Werkzeugträgers befestigt sind, auch parallel nebeneinander an der Stirnfläche des Werkzeugträgers angeordnet sein. Die Kreiselzinken sind dann erheblich gegeneinander versetzt, was bei bestimmten Bodenarten praktisch sein kann. Besonders vorteilhaft ist eine solche Anordnung, wenn die Halteteile bolzenartig ausgeführt sind, weil auf diese Weise jedes Halteteil mehrmals an der Stirnfläche des Werkzeugträgers befestigt werden kann, so daß eine sehr stabile Fixierung herstellbar ist. Die Rückfederung wird hierbei kaum berührt, weil die bolzenartigen Kreiselzinken ohnehin selbst genügend Elastizität aufweisen.

Die Rückfederung der Kreiselzinken kann verbessert werden, wenn in der Stirnfläche des Werkzeugträgers flache Ausnehmungen vorgesehen sind, die von den Halteteilen überdeckt werden in der Weise, daß diese bei hoher, an dem zugehörigen Kreiselzinken wirksamer Belastung elastisch in die jeweilige Ausnehmung ausweichen können. Besonders zweckmäßig ist es dabei, wenn die Halteteile in einer schmalen Zunge auslaufen, die auf der Randkontur der jeweiligen Stirnfläche aufliegt.

Besonders bei bolzenartigen Halteteilen ist es günstig, wenn die Endstücke der Halteteile jeweils eine Durchbrechung in dem Werkzeugträger durchdringen und auf einer seiner Stirnfläche abgewandten Rückfläche federnd arretiert sind; diese Federung erfolgt in einfacher Weise beispielsweise durch eine das jeweilige Endstück untergreifende Rückstellfeder.

Bei einer ganz besonders vorteilhaften Ausgestaltung der Erfindung sind zwischen den Halteteilen und der Stirnfläche des Werkzeugträgers flache Federstücke vorgesehen, die ein Ausweichen des jeweiligen Halteteiles unter der Belastung des zugehörigen Kreiselzinkens zulassen. Die Federstücke werden zweckmäßig als Blattfedern ausgebildet, die zwischen den Haltestücke eingelegt oder in Durchbrechungen der Haltestücke gelagert sind. Die Federstücke können auf einer Seite oder beiderseits des zugehörigen Halteteils plaziert werden, das um das anliegende Halteelement als Drehkante gegen das jeweilige Federstück verschwenkbar ist.

Die Rückfederung kann auch dadurch wesentlich verbessert werden, daß das Halteteil an seinem Endstück mit einem ersten, zylindrischen Halteelement lagegesichert ist und ein weiteres, mit einem vorzugsweise konischen Schaft versehenes, von dem Endstück abgerücktes Halteelement so vorgesehen ist, daß das Halteteil bei Belastung des zugehörigen Kreiselzinkens bis zur durchgehenden Anlage an dem konischen Halteelement verformbar, vorzugsweise tordierbar ist.

Die Erfindung wird nachstehend an Hand der Zeichnung an mehreren Ausführungsbeispielen näher erläutert. Es zeigen
- Fig.1: in drei Teilfig.1a-1c ein erstes Ausführungsbeispiele in zwei Ausführungen in gemeinsamer Darstellung,
- Fig.2: in drei Teilfig.2a-2c die zweite Ausführung entsprechend Fig.1, jedoch geringfügig verändert,
- Fig.3: in zwei Teilfig.3a,3b eine dritte, veränderte Ausführung entsprechend Fig.1,
- Fig.4: in zwei Teilfig.4a,4b eine vierte, veränderte Ausführung entsprechend Fig.1,
- Fig.5: in drei Teilfig.5a-5c eine fünfte, veränderte Ausführung entsprechend Fig.1,
- Fig.6: in zwei Teilfig.6a,6b eine sechste, veränderte Ausführung entsprechend Fig.1.,
- Fig.7 und Fig.8: in je zwei Teilfig.7a,7b und 8a,8b ein zweites Ausführungsbeispiel in zwei Ausführungen,
- Fig.9: in drei Teilfig.9a-9c ein drittes Ausführungsbeispiel in einer ersten Ausführung,
- Fig.10: in drei Teilfig.10a-10c eine zweite Ausführung entsprechend Fig. 10 und
- Fig.11: in zwei Teilfig.11a,11b ein viertes Ausführungsbeispiel,
- Fig.12: eine Ansicht eines Werkzeugträgers von unten mit hieran befestigten Kreiselzinken,
- Fig.13: einen Schnitt nach Linie XIII - XIII in Fig. 12 und
- Fig. 14: einen Schnitt nach Linie XIV - XIV in Fig. 12,
sämtlich in vereinfacht schematischer Darstellung.

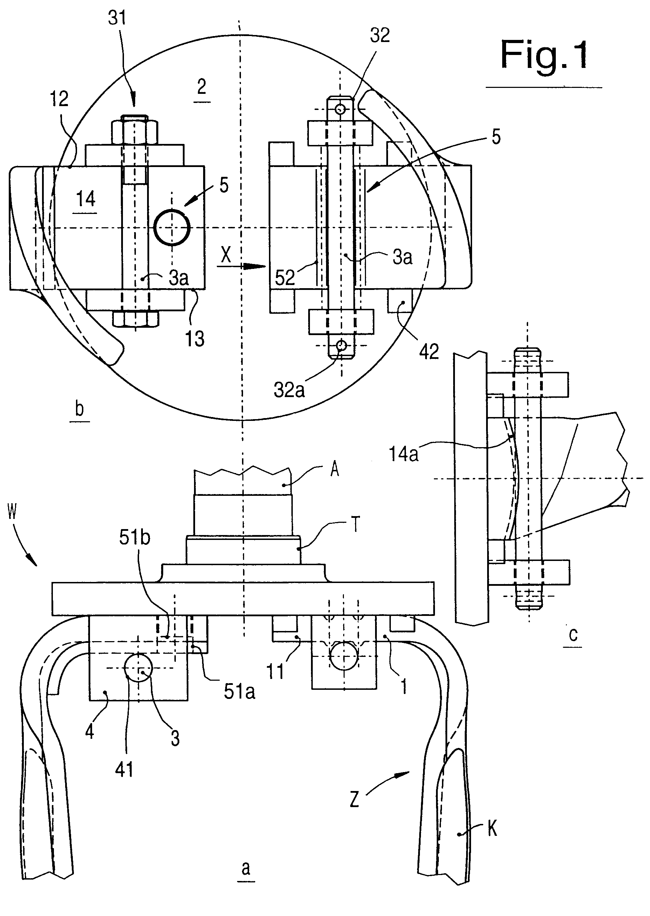

In der Zeichnung Fig.1-11 ist jeweils ein Werkzeugkreisel W in erfindungsgemäßer Ausführung zumindest in einer Hauptansicht (Teilfig.a) und einer Untersicht (Teilfig.b) dargestellt, wobei hier stets jeweils zwei Kreiselzinken Z an einem Werkzeugträger T befestigt sind.

Die Werkzeugträger T sind Bestandteil einer in der Zeichnung nicht weiter aufgeführten Bodenbearbeitungsmaschine, die mit einem quer zu ihrer Fahrtrichtung angeordneten Getriebegehäuse für den Antrieb einer Vielzahl von nebeneinander in einer Reihe befindlichen Werkzeugkreiseln W ausgestattet und in dieser Form fachüblich ist, so daß auf eine ausführliche Schilderung verzichtet werden kann. Die Erfindung ist zudem auf eine spezielle Ausführung auch nicht beschränkt.

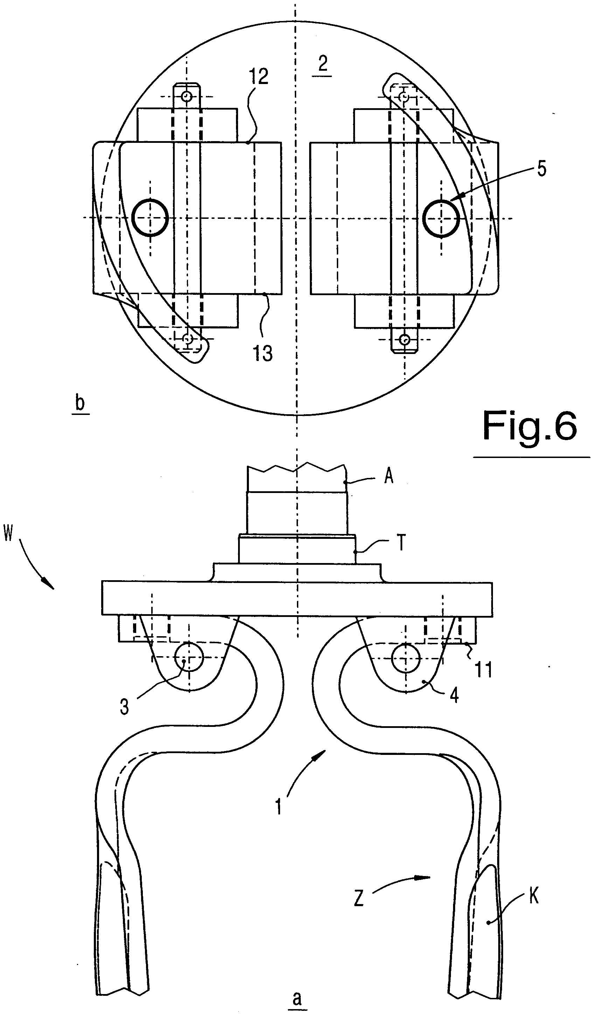

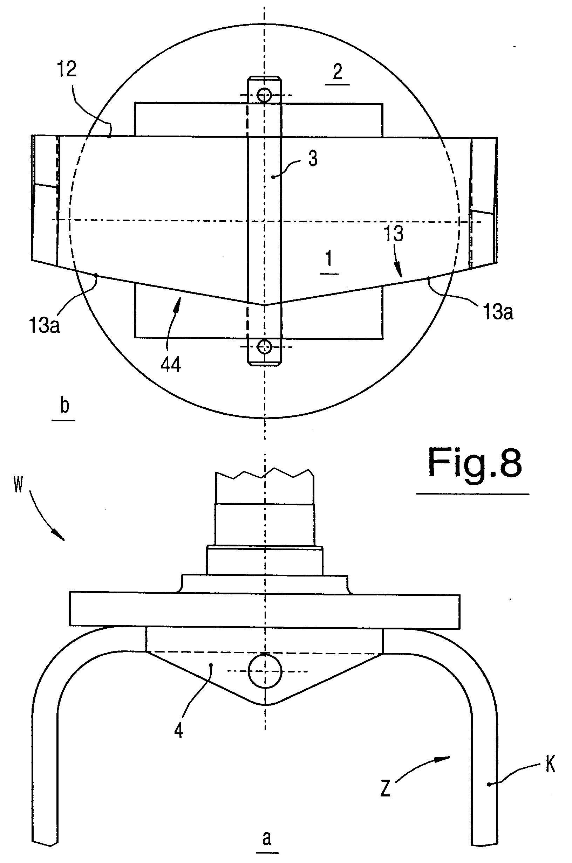

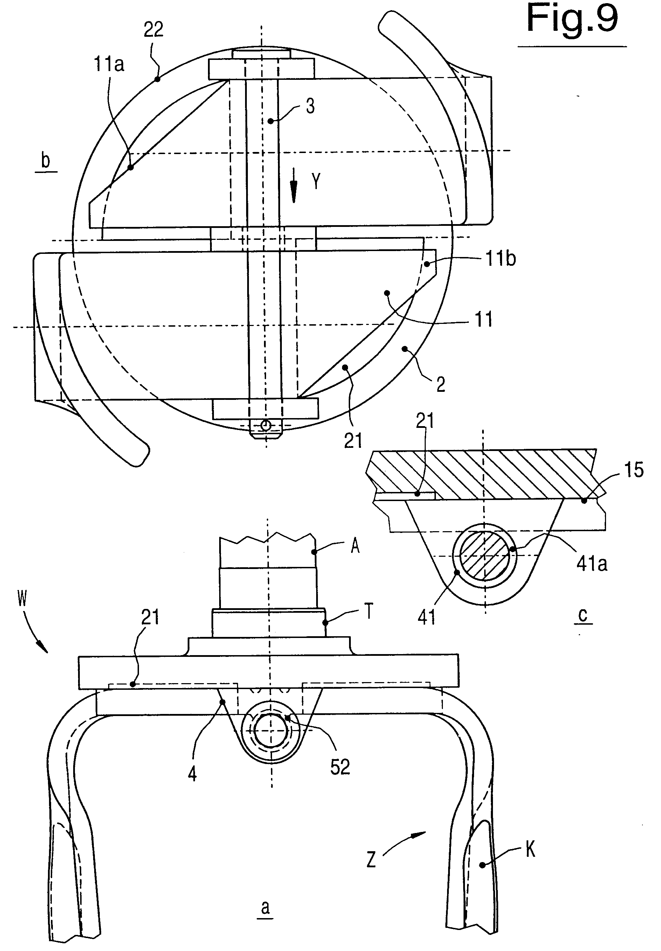

Die Kreiselzinken Z bestehen entsprechend Fig.1-7 und 9-11 jeweils aus einem nach unten gerichteten Korpus K und einem von dem Korpus K um etwa 90° abgebogenen Halteteil 1 und sind so an dem Werkzeugträger T befestigt, daß die freien Endstücke 11 der Halteteile 1 entweder fluchtend (Fig.1-7) oder parallel nebeneinander (Fig.9-11) an einer Stirnfläche 2 des Werkzeugträgers T anliegen. Die Endstücke 11 weisen dabei entweder in eine zueinander weisende Richtung (Fig.1-5,7 und 9-11) oder voneinander weg (Fig.6). Bei einem weiteren erfindungsgemäßen Ausführungsbeispiel gemäß Fig.8 sind an ein und demselben Halteteil 1 einstückig beide Korpusse K vorgesehen. In den Untersichten der Fig.1-11 ist zu erkennen, daß die Kreiselzinken Z an ein und demselben Werkzeugträger T durchweg spiegelbildlich angeordnet sind.

Der flanschartige Werkzeugträger T ist an dem nach unten weisenden, aus dem Getriebegehäuse herausgeführten Ende einer Antriebswelle A mit dieser drehfest vorgesehen, beispielsweise durch eine Keilwellenverzahnung oder dergl. Auf der Antriebswelle A befindet sich innerhalb des Getriebegehäuses das Antriebsrad für den Werkzeugkreisel W.

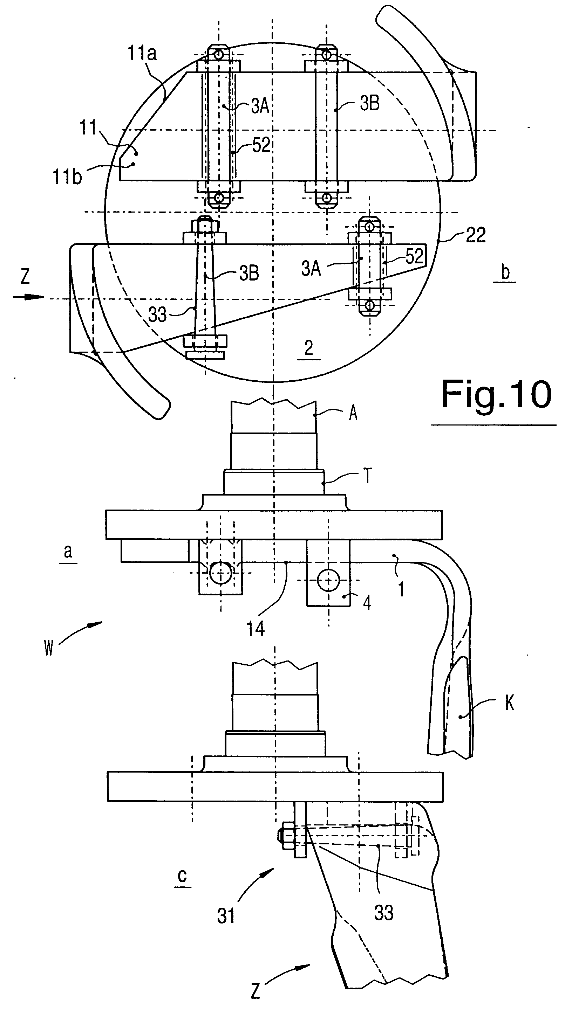

Die Halteteile 1 werden so an dem Werkzeugträger T befestigt, daß sie wie erwähnt an dessen Stirnfläche 2 anliegen. In der Richtung der Flächennormalen dieser Stirnfläche 2 sind die Halteteile 1 mittels leicht montier- und demontierbarer Halteelemente in Form von Haltebolzen 3 fixiert, die so gelagert sind, daß ihre in der Regel kreiszylindrischen Bolzenschäfte 3a möglichst in ihrer ganzen Länge an den unteren, waagerechten Halteflächen 14 der Halteteile 1 anliegen, jeweils eine gerade Kantenanlage bildend, wenn die Halteteile 1 als flache, im Querschnitt rechteckige Bänder ausgebildet sind (Fig.1-10). Sind stattdessen die Halteteile 1 als im Querschnitt kreisförmige Bolzen oder die Bolzenschäfte 3a konisch ausgeführt, findet eine Punktanlage der Haltebolzen 3 an den Halteteilen 1 statt. Im allgemeinen genügt es, wenn jedes Halteteil 1 an der Stirnfläche 2 mit einem einzigen Haltebolzen 3 festgehalten wird; in einigen speziellen Ausführungsbeispielen (Fig.10-11) ist es hingegen ratsam, jeweils zwei Haltebolzen 3 vorzusehen (siehe unten). Andererseits ist es im Einzelfall auch möglich, mittels eines einzigen Haltebolzens 3 beide Halteteile 1 abzuriegeln (Fig.9).

Sind mehrere Haltebolzen 3 vorgesehen, so sind sie parallel zueinander angeordnet; sie verlaufen auch durchweg parallel zu den Biegeachsen, um welche die Halteteile 1 von den Korpussen K der Kreiselzinken Z - um 90° - abgewinkelt sind. In der Richtung dieser Achsen sind die Halteteile 1 mit geringem Spiel zwischen Haltestücken 4 arretiert, welche, die Längsseiten 12,13 der Halteteile 1 flankierend, an der Stirnfläche 2 angebracht sind.

Damit sind die Halteteile 1 bereits in zwei aufeinander senkrecht stehenden Richtungen fixiert. Ein abschließender Formschluß senkrecht zu diesen beiden Richtungen wird erfindungsgemäß entweder durch spezielle Arretierstücke 5 erreicht oder durch eine zweckmäßige Ausbildung der Haltestücke 4.

In der Hauptansicht der Teilfig.1a und der zugehörigen Untersicht in der Teilfig.1b eines ersten Ausführungsbeispiels der Erfindung sind die Kreiselzinken Z mit aus ihrem Korpus K abgewinkelten, als flachrechteckige Bänder ausgebildeten Halteteilen 1 an dem Werkzeugträger T befestigt. Auf dessen Stirnfläche 2 ist beiderseits der Halteteile 1 je ein Haltestück 4 vorgesehen, das hier von auf der Stirnfläche 2 aufrecht stehenden, rechteckigen Blechstücken gebildet wird. In den Haltestücken 4 befindet sich jeweils eine Lagerbohrung 41, in der ein Haltebolzen 3 eingeführt ist. In der linken Hälfte der Teilfig.1a,1b wird der Haltebolzen 3 von einer Schraubverbindung 31 realisiert, in der rechten von einem zylindrischen Schaft 32, der in einfacher Weise mittels Splinten in seinen Querbohrungen 32a gesichert ist (In der Teilfig.1a wie in allen Hauptansichten der Zeichnung ist der Haltebolzen 3 durchweg vereinfachend als einfacher Kreisquerschnitt dargestellt, selbst wenn eine Schraubverbindung 31 vorgesehen ist). Auch die Arretierstücke 5 sind jeweils unterschiedlich ausgebildet. Während links eine Durchbrechung 51a in dem Halteteil 1 vorgesehen ist, die ein auf der Stirnfläche 2 des Werkzeugträgers T ortsfest angebrachtes komplementäres, zapfenartiges Arretierstück 51b untergreift, sind auf der rechten Ausführung an dem Halteteil 1 die beiden zueinander parallelen rippenartigen Arretierstücke 52 als Sicken an dem Halteteil 1 ausgebildet; sie verlaufen parallel zu den Haltebolzen 3 und flankieren deren Bolzenschäfte 3a, wenn sie an der unteren Haltefläche 14 der Halteteile 1 anliegen. In beiden Fällen ist das Halteteil 1 demzufolge auch in der fluchtenden Richtung beider Halteteile 1 fixiert, wenn diese durch die Haltebolzen 3 an der Stirnfläche 2 festgehalten werden.

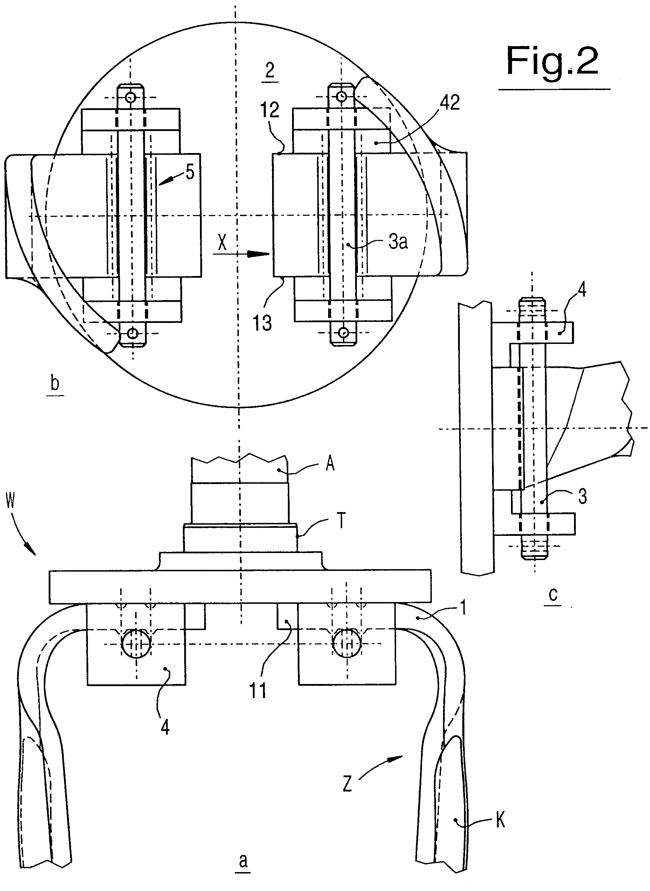

Das Haltestück 4 kann aus mehreren Teilen bestehen, wie die rechte Ausführung der Fig.1 zeigt. Dort sind zusätzliche Fixierstücke 42 geringer Höhe auf der Stirnfläche 2 vorgesehen, welche das Halteteil 1 begrenzen. Das eigentliche Haltestück 4 kann hier sehr kurz gehalten werden, weil die Fixierstücke 42, die im übrigen (Fig.2) mit dem Haltestück 4 einstückig ausgeführt sein können, das Halteteil 1 in ganzer Länge arretieren.

In der Teilfig.1c, die eine Ansicht aus der Teilfig.1a in Richtung X darstellt, ist gezeigt, daß das Halteteil 1 quergewölbt ausgeführt sein kann, um die Federung des Kreiselzinkens Z zu verbessern; die Wölbung 14a der Haltefläche 14 an dem unter hoher Belastung an dem Korpus K des Kreiselzinkens Z partiell tordierten Halteteil 1 kann sich dadurch auf dem Bolzenschaft 3a abwälzen und läßt den Kreiselzinken Z ausweichen.

In der Fig.2, deren Teilfig.2a-2c den Teilfig.1a-1c der Fig.1 entsprechen, ist die besonders vorteilhafte rechte Ausführung der Teilfig.1a,1b nochmals ausführlich dargestellt, wobei hier die Fixierstücke 42 unmittelbar an den Haltestücken 4 vorgesehen sind, die dafür etwas breiter ausgebildet wurden. Das Profil der Haltestücke 4 ist am besten in der Teilfig.2c zu erkennen, die eine Ansicht X aus der Teilfig.2a darstellt.

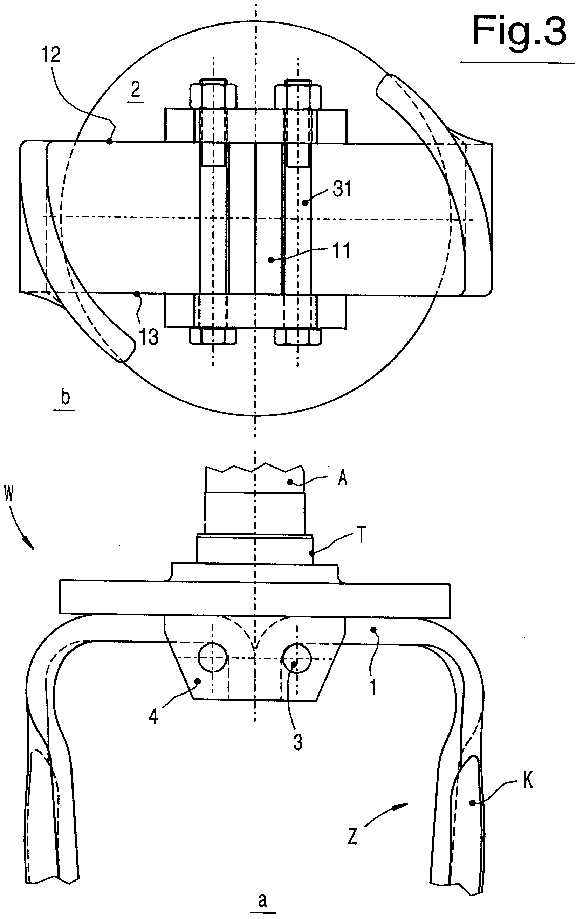

In einer dritten Ausführung entsprechend der Fig.3 mit der Hauptansicht 3a und der Untersicht 3b ist auf gesonderte Arretierstücke 5 verzichtet worden. Stattdessen sind die zueinander weisenden Endstücke 11 der Halteteile 1 um etwa 90° in der Form von dem Halteteil 1 abgewinkelt, daß sie senkrecht zu der Stirnfläche 2 stehen. Die Anordnung ist so getroffen, daß die Endstücke 11 aneinanderstoßen, wenn die Halteteile 1 durch die Haltebolzen 3 (hier wiederum Schraubverbindungen 31) an dem Werkzeugträger T fixiert sind.

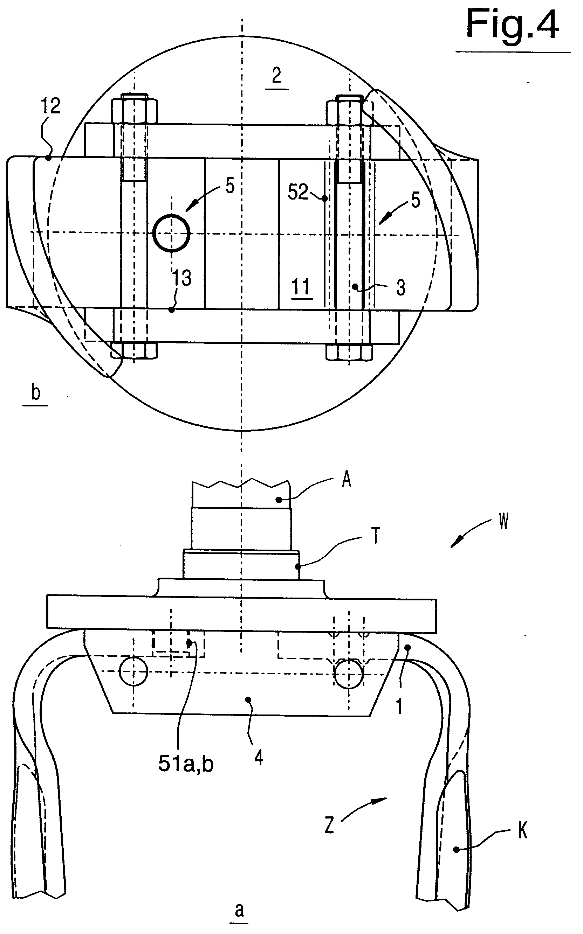

Die Anordnung der Fig.4 folgt mit ihren analogen Teil-fig.4a,4b den Ausführungen aus Fig.1 mit dem Unterschied, daß hier für nach wie vor getrennte Halteteile 1 der beiden Kreiselzinken Z beiderseits der Halteteile 1 nur jeweils ein für beide Halteteile 1 gemeinsames Haltestück 4 an der Stirnfläche 2 angebracht ist.

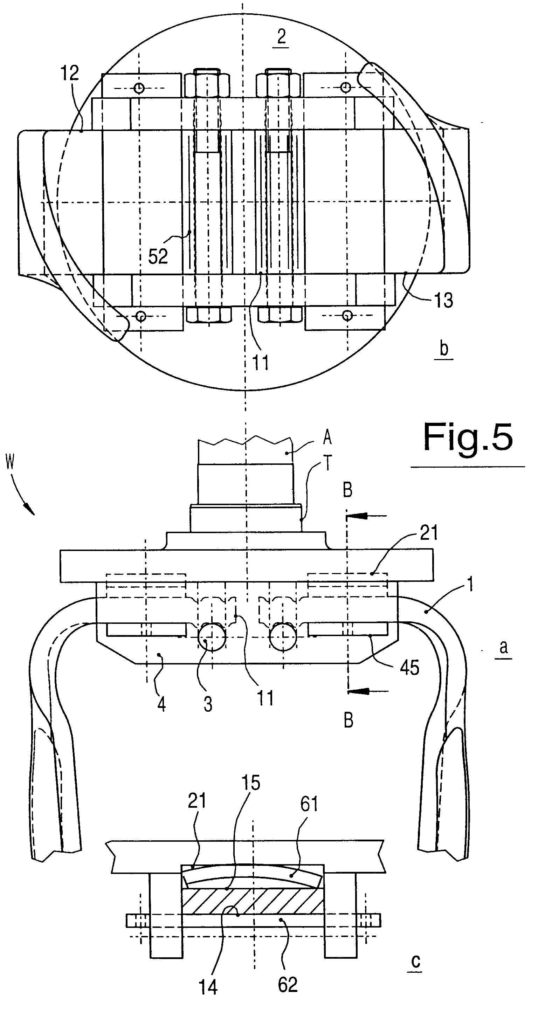

In einer weiteren Variante sind entsprechend Fig.5 spezielle Federstücke 61 vorgesehen, die zwischen den Halteteilen 1 und dem Werkzeugträger T eine Rückfederung der Kreiselzinken Z zulassen. Zu diesem Zweck sind, wie insbesondere in der Hauptansicht der Teilfig.5a und dem Schnitt B - B daraus in der Teilfig.5c gut zu erkennen ist, in der Stirnfläche 2 des Werkzeugträgers T flache rechteckige Ausnehmungen 21 eingetieft, in denen die als geringfügig gewölbte Blattfedern ausgebildeten Federstücke 61 eingelegt sind; sie liegen andererseits an der oberen Haltefläche 15 des Halteiles 1 an und verformen sich geringfügig unter Belastung an den Kreiselzinken Z. Die unteren Halteflächen 14 dagegen liegen auf Gegenhaltern 62 auf, die in Schlitzen 45 der Haltestücke 4 eingesetzt und darin mittels Splinten oder dergleichen gesichert sind; sie dienen im wesentlichen nur zur Arretierung der Halteteile 1 an den Federstücken 61, können aber auch selbst als Blattfedern ausgebildet sein. Die Haltebolzen 3 sind hierbei nahe beieinander in dem gemeinsamen Haltestück 4 angeordnet und unterfangen die (unverformten) Endstücke 11 der beiden Halteteile 1, an denen sich auch die rippenartigen Arretierstücke 52 befinden.

Auf zusätzliche Federstücke 61 kann man verzichten, wenn die Federung der Kreiselzinken Z selbst verbessert wird, wie das beispielsweise in einer weiteren Ausführung entsprechend Fig.6 vorgenommen worden ist. Dort sind (Teilfig.6a) die Endstücke 11 der Halteteile 1 nochmals abgewinkelt, und zwar jeweils um 180° in der zur ersten Abkantung entgegengesetzten Richtung, so daß die Endstücke 11 nunmehr voneinander weg radial nach außen weisen.

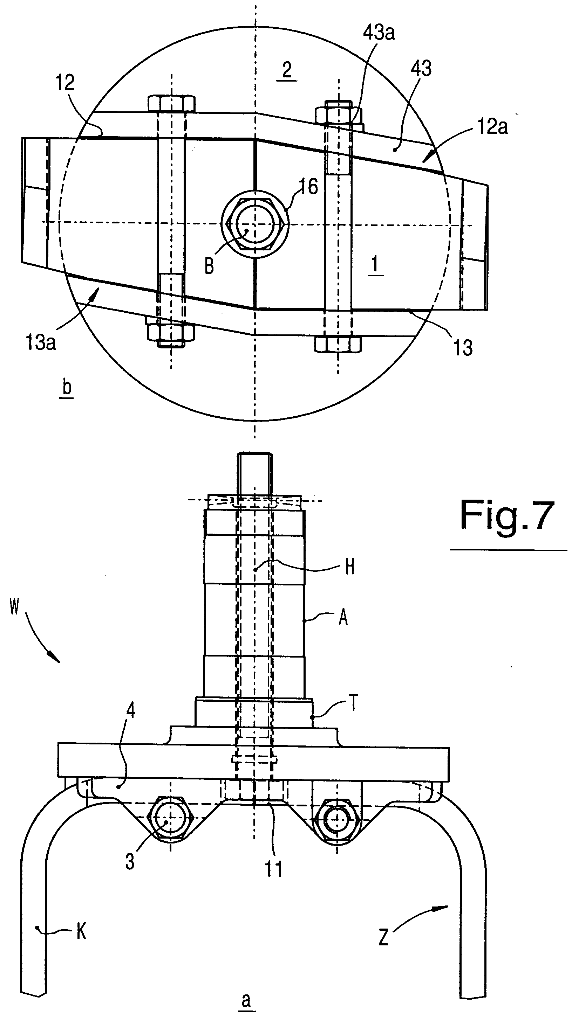

Ein zweites, in den Fig.7-8 wiedergegebenes Ausführungsbeispiel kommt durchweg ohne zusätzliche Arretierstücke 5 aus. Ihre Funktion wird von den Haltestücken 4 mit übernommen. Dazu sind die Längsseiten 12,13 der Halteteile 1 nicht durchgängig parallel ausgebildet; mindestens ein Teilbereich 12a,13a ist jeweils winklig zu den übrigen Längsseiten 12,13 in der Weise angelegt, daß die Halteteile 1 radial nach außen fixiert sind, wie das in den beiden Untersichten der Teilfig.7b,8b unschwer zu erkennen ist. Die flankierenden Haltestücke 4 folgen jeweils der so ausgebildeten Kontur der Halteteile 1 in Schrägstücken 43,44. Im übrigen unterscheiden sich die Haltestücke 4 aber nicht von den bisher beschriebenen Ausgestaltungen, wie das den jeweiligen Hauptansichten der Teilfig.7a,8a ohne weiteres zu entnehmen ist.

In der ersten Ausführung entsprechend Fig.7 ist bei diesem Ausführungsbeispiel für jeden Kreiselzinken Z ein Halteteil 1 vorgesehen; die Halteteile 1 stoßen mit ihren Endstücken 11 in der Hauptachse H des Werkzeugträgers T aneinander und sind auf diese Weise auch nicht mehr aufeinander zu verschiebbar, wenn sie an den Schrägstücken 43 anliegen, an denen im übrigen die Schräge ausgleichende Spannflächen 43a ausgebildet sind, damit auch eine Schraubverbindung 31 für die erforderlichen Haltebolzen 3 einsetzbar ist.

Im Bereich der Hauptachse H verbleibt dabei genügend Platz für den in der Fig.7 gezeigten Fall, daß eine zentrale Befestigungsschraube B in der Antriebswelle A vorgesehen werden soll, beispielsweise zur Befestigung des zugehörigen Antriebszahnrades. Es genügt, wenn die Endstücke 11 mit entsprechenden Aussparungen 16 versehen sind.

Bei einer zweiten Ausführung (Fig.8) sind die Kreiselzinken Z mit einem gemeinsamen Halteteil 1 versehen.

Hier flankieren Schrägstücke 44 auf einer Längsseite 13 das Halteteil 1, das in zueinander symmetrischen Teilbereichen 13a winklig zu der gegenüberliegenden, gerade durchgehenden und einem entsprechenden Haltestück 4 benachbarten Längsseite 12 gestaltet ist. Ein mittig angeordneter, einziger Haltebolzen 3 begünstigt die Federeingenschaft der Einspannung.

In zwei weiteren Ausführungsbeispielen wird gezeigt, daß die Halteteile 1 nicht notwendig fluchtend auf der Stirnfläche 2 befestigt sein müssen, sondern daß sie dort auch parallel nebeneinander angebracht werden können. Soweit es sich dabei um flache, bandartige Halteteile 1 wie in den beiden Ausführungen entsprechend Fig.9-10 handelt, ist es dabei zweckmäßig, wenn die Stirnseiten 11a ihrer Endstücke 11 nicht wie in dem bisher beschriebenen Ausführungsbeispiel (Fig.1-8) rechtwinklig zu den Längsseiten 12,13 verlaufen, sondern schräg dazu, etwa der Randkontur 22 der Stirnfläche 2 folgend.

In der Ausführung der Fig.9 sind beide Halteteile 1 mittels eines einzigen, beide überspannenden Haltebolzens 3 arretiert, der in den fluchtenden Lagerbohrungen 41 dreier Haltestücke 4 gehaltert ist, wobei sich zwischen den Halteteilen 1 nur ein einziges Haltestück 4 befindet, wie in der Untersicht der Teilfig.9b zu erkennen ist. In der (geschnittenen) Ansicht Y aus Teilfig.9b entsprechend Teilfig.9c ist ein Ringspalt 41a zwischen der Lagerbohrung 41 in dem mittleren Haltestück 4 und der Außenkontur des Haltebolzens 3 eingetragen, der die Einführung des Haltebolzens 3 erleichtert und insbesondere auch eine Einfederung des Halteteiles 1 erleichtert. Diesem Zweck dienen auch relativ flache Ausnehmungen 21 in der Stirnfläche 2 des Werkzeugträgers T, die so bemessen sind, daß die obere Halteflächen 15 des Halteteiles 1 im Bereich von deren Endstücken 11 durchfedern können, wenn die Kreiselzinken Z hoch belastet sind. Die Endstücke 11 laufen in Zungen 11b aus, die auf der nicht ausgenommenen Randkontur 22 der Stirnfläche 2 aufliegen, so daß die Endstücke 11 in die Ausnehmungen 21 elastisch einwölben können. Im übrigen werden hier wiederum rippenartige Arretierstücke 52 an den Halteteilen 1 ausgebildet (Hauptansicht der Teilfig.9a).

Bei einer zweiten Ausführung entsprechend Fig.10 sind die Halteteile 1 unabhängig voneinander lagegesichert. Sie sind schmaler als in der vorigen Ausführung und jeweils von zwei parallelen, voneinander beabstandeten Haltebolzen 3 gehalten. In der Fig.10 sind zwei Varianten gemeinsam dargestellt, wie in der Untersicht der Teilfig.10b deutlich wird.

In deren oberer Hälfte verlaufen die Längsseiten 12,13 des Halteteiles 1 bis auf die winklig abgeschnittene, der Randkontur 22 folgenden Stirnseite 11a des Endstückes 11 parallel zueinander, und die beiden Haltebolzen 3A,3B unterscheiden sich nur dadurch, daß der Haltebolzen 3A mit dem (rippenartigen) Arretierstück 52 in der mehrfach beschriebenen Weise zusammenwirkt und der Haltebolzen 3B von der unteren Haltefläche 14 beabstandet gelagert ist, so daß das Halteteil 1 wiederum etwas abfedern kann. Die Situation ist in der Hauptansicht der Teilfig.10a dargestellt.

In der unteren Hälfte der Teilfig.10b hingegen ist das ganze Halteteil 1 in der Richtung seines Endstückes 11 zungenartig verjüngend ausgebildet, und der mit dem rippenartigen Arretierstück 52 zusammenwirkende Haltebolzen 3A ist an das Endstück 11 gerückt und fällt dementsprechend viel kürzer als der Haltebolzen 3B aus. Dieser ist hier (Ansicht Z aus der Teilfig.10b) entsprechend Teilfig.10c als Schraubverbindung 31 ausgebildet, mit einem konischen Schaft 33 versehen und liegt etwa punktförmig an der von der Längsseite 12 begrenzten unteren Haltefläche 14 an, so daß das Halteteil 1 tordieren kann, bis es in der ganzen Länge einer Kantenanlage an die Haltefläche 14 anschlägt.

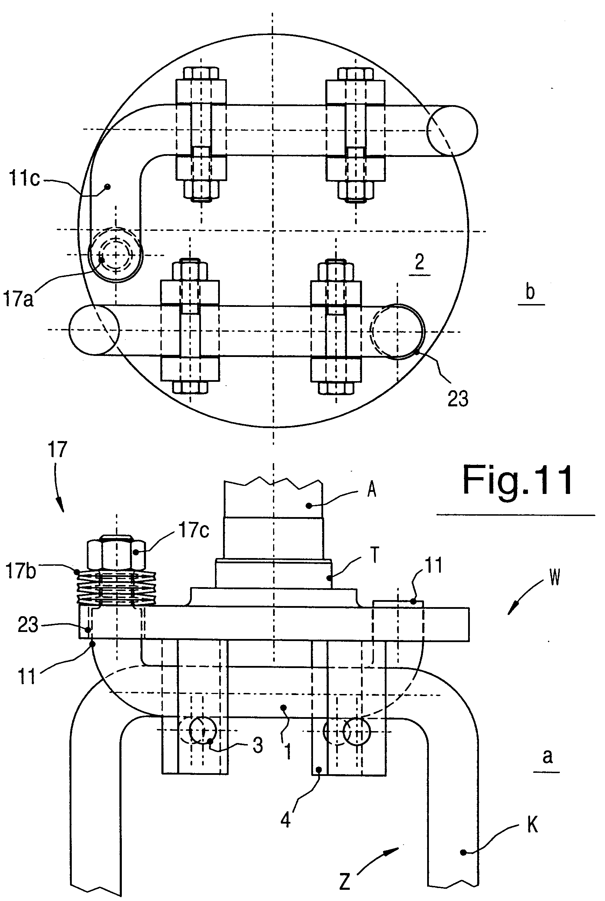

Ein viertes Ausführungsbeispiel entsprechend Fig.11 ist für die Befestigung von Kreiselzinken Z mit kreisförmigem Querschnitt des Korpus K und des Halteteiles 1 eingerichtet. Die erforderlichen Arretierstücke 5 bestehen hier aus den Endstücken 11 der Halteteile 1 und diese Endstücke 11 aufnehmenden Durchführungen 23 in dem Werkzeugträger T. Die Endstücke 11 sind von dem übrigen Halteteil 1 um 90° (in der Fig.11 nach oben) abgewinkelt, weshalb die übrigen Bereiche der Halteteile 1 nicht unmittelbar an der Stirnfläche 2 anliegen, sondern von dieser etwas beabstandet auf Verbindungsstegen aufliegen, welche die beiderseits die Halteteile 1 flankierenden Haltestücke 4 miteinander verbinden, so daß der Abbiegebereich der Endstücke 11 von der Stirnfläche 2 abgerückt ist.

Die Untersicht der Teilfig.11b (obere Hälfte) macht deutlich, daß das Endstück 11 abgekröpft sein kann, so daß eine wenn auch kurze Kröpfung 11c die Rückfederung des Halteteiles 1 befördert, die weiter verbessert werden kann, wenn das Endstück 11 federnd arretiert ist, wie das in der Hauptansicht der Teilfig.11a zu sehen ist. Dort endet das Endstück 11 in einem Bolzengewinde 17a einer Spanneinrichtung 17, auf dem Tellerfedern 17b mittels einer Spannmutter 17c spannbar sind.

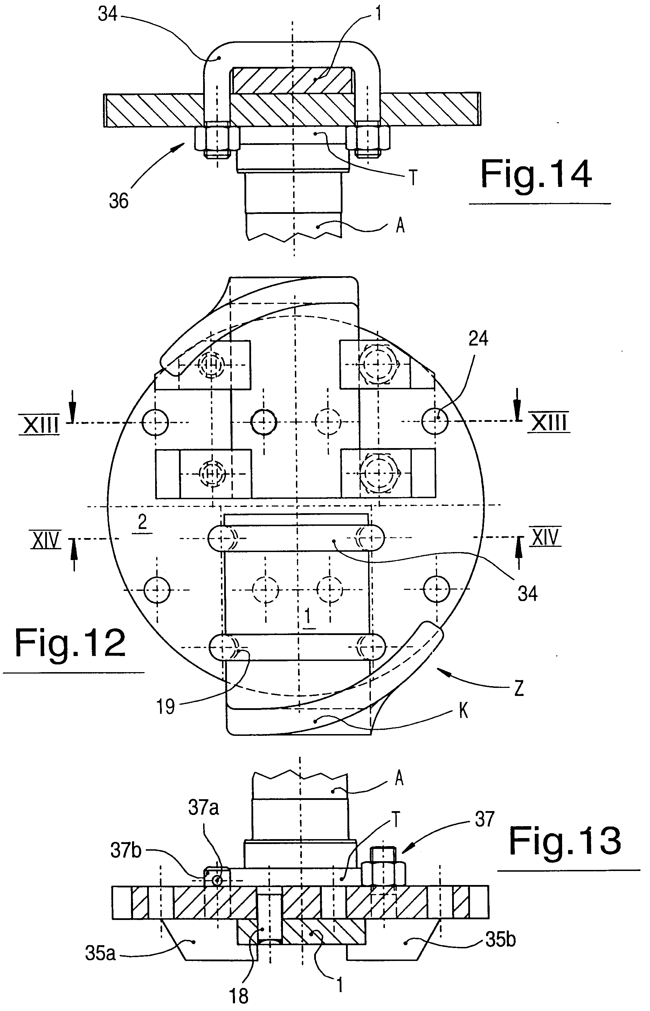

Das Ausführungsbeispiel nach Fig. 12, in der gleiche Teile mit gleichen Bezugszeichen versehen sind, zeigt einen Werkzeugträger T mit hieran befestigten Zinken. Diese in Fig. 13 im Schnitt dargestellten Zinken sind mittels hakenförmiger Halteelemente 35a, 35b befestigt. Das hakenförmige Halteelement 35b, das das Halteteil 1 mit einer Nase untergreift, ist mit einer Schraube 37 an dem Werkzeugträger T befestigt. Das andere hakenförmige Halteteil 35a weist einen Steckbolzen 37b auf, der durch eine Bohrung des Trägers T durchgesteckt und mittels eines in eine Querbohrung 37a eingesetzten Sicherungsstiftes gesichert ist. Diese Ausführungsform nach Fig. 13 hat ebenso wie die Ausführungsform nach Fig. 14, die in der unteren Hälfte der Fig. 12 dargestellt ist, den Vorteil, daß die Schrauben 36 oberhalb des Haltetellers liegen, d. h. bei der Arbeit im wesentlichen gegenüber dem Erdreich abgeschirmt sind.

Bei dem Ausführungsbeispiel nach Fig. 14 ist für die Befestigung des Halteteiles 1 des Zinkens Z ein U-förmiger Bügel (Schraubband) vorgesehen, dessen Enden mit Gewinde versehen sind. Mit dem Schraubband wird das Halteteil 1 gegenüber dem Träger verspannt.

Falls neben einer reinen Klemmwirkung auch noch eine formschlüssige Verbindung vom Halteteil 1 des Zinkens mit dem Werkzeugträger T erreicht werden soll, kann dies beispielsweise mittels eines Bolzens 18 erfolgen, der, wie dies das Ausführungsbeispiel nach Fig. 13 zeigt, mit dem Halteteil 1 verschweißt ist. Dieser Bolzen greift in eine Bohrung des Werkzeugträgers T ein.

### Bezugszeichenaufstellung

- 1: Halteteil
- 11: Endstück
- 11a: Stirnseite
- 11b: Zunge
- 11c: Kröpfung
- 12,13: Längsseite
- 12a,13a: Teilbereich
- 14: (untere) Haltefläche
- 14a: Wölbung
- 15: (obere) Haltefläche
- 16: Aussparung
- 17: Spanneinrichtung
- 17a: Bolzengewinde
- 17b: Tellerfeder
- 17c: Spannmutter
- 18: Zapfen
- 19: Ausnehmung
- 2: Stirnfläche
- 21: Ausnehmung
- 22: Randkontur
- 23: Durchbrechung
- 3,3A,3B: Haltebolzen
- 3a: Bolzenschaft
- 31: Schraubverbindung
- 32: Schaft
- 32a: Querbohrung
- 33: (konischer) Schaft
- 34: Schraubband
- 35a,b: Haltehaken
- 36: Verschraubung
- 37: Verschraubung
- 37a: Querbohrung
- 37b: Zapfen
- 4: Haltestück
- 41: Lagerbohrung
- 41a: Ringspalt
- 42: Fixierstück
- 43,44: Schrägstück
- 43a: Spannfläche
- 45: Schlitz
- 5: Arretierstück
- 51a: Durchbrechung
- 51b: zapfenartiges Arretierstück
- 52: rippenartiges Arretierstück
- 61: Federstück
- 62: Gegenhalter
- A: Antriebswelle
- B: Befestigungsschraube
- H: Hauptachse
- K: Korpus
- T: Werkzeugträger
- W: Werkzeugkreisel
- Z: Kreiselzinken

## Patentansprüche

1. Bodenbearbeitungsmaschine mit einem quer zur Fahrtrichtung angeordneten Getriebegehäuse für den Antrieb einer Vielzahl von nebeneinander in einer Reihe befindlichen Werkzeugkreiseln (W) mit nach unten gerichteten Kreiselzinken (Z), die mit einem an den Kreiselzinken (Z) ausgebildeten, ihnen gegebenenfalls gemeinsamen Halteteil (1) an einem mit einer Antriebswelle (A) drehfest verbundenen, flanschartigen Werkzeugträger (T) auswechselbar befestigt sind, wobei die Halteteile (1) an einer ebenen Stirnfläche (2) des Werkzeugträgers (T), vorzugsweise unmittelbar, anliegen,
dadurch gekennzeichnet, daß
(a) die Halteteile (1) an ihren Längsseiten (12,13) beiderseits von mindestens je einem von der Stirnfläche (2) des Werkzeugträgers (T) gehalterten Haltestück (4) flankiert werden und daß
(b) die Halteteile (1) untergreifende Halteelemente (3) vorgesehen sind, deren Erstreckungsrichtung im wesentlichen quer zu den Längsseiten (12,13) der Halteteile (1) gerichtet sind.

2. Bodenbearbeitungsmaschine nach Anspruch 1, dadurch gekennzeichnet, daß die Halteteile (1) in der Richtung ihrer Längsseiten (12,13) bei eingesetzten Halteelementen (3) formschlüssig gehaltert sind.

3. Bodenbearbeitungsmaschine nach Anspruch 2, dadurch gekennzeichnet, daß die formschlüssige Verbindung von Halteteil (1) und Werkzeugträger (T) entweder durch Halteteil (1) und Werkzeugträger (T) festlegende Arretierstücke (5,18,51b) oder durch Aussparungen (19) im Halteteil (1) erhalten wird, in die die Haltestücke (4) oder die Halteelemente eingreifen

4. Bodenbearbeitungsmaschine nach einem der Ansprüche 1 bis 3, dadurch gekennzeichnet, daß an dem Werkzeugträger (T) zwei spiegelbildlich zueinander liegende Kreiselzinken (Z) vorgesehen sind.

5. Bodenbearbeitungsmaschine nach Anspruch 4, dadurch gekennzeichnet, daß die Kreiselzinken (Z) mit einem gemeinsamen, an der Stirnfläche (2) des Werkzeugträgers (T) anliegenden Halteteil (1) versehen sind.

6. Bodenbearbeitungsmaschine nach einem der Ansprüche 1 bis 5, dadurch gekennzeichnet, daß die Halteteile (1) mit jeweils zueinander parallelen, geradlinigen Längsseiten (12,13) versehen sind.

7. Bodenbearbeitungsmaschine nach einem der Ansprüche 1 bis 5, dadurch gekennzeichnet, daß die Halteteile (1) Längsseiten (12,13) aufweisen, die zumindest in Teilbereichen (12a,13a) gebrochen und/oder winklig zueinander ausgebildet sind.

8. Bodenbearbeitungsmaschine nach Anspruch 6 oder 7, dadurch gekennzeichnet, daß die Halteteile (1) als flache, im Querschnitt vorzugsweise rechteckige Bänder ausgebildet sind.

9. Bodenbearbeitungsmaschine nach Anspruch 6, dadurch gekennzeichnet, daß die Halteteile (1) als im Querschnitt vorzugsweise kreisförmige Bolzen ausgebildet sind.

10. Bodenbearbeitungsmaschine nach einem der Ansprüche 1 bis 9, dadurch gekennzeichnet, daß die Halteteile (1) jeweils von dem zugehörigen Kreiselzinken (Z) um etwa 90° abgebogen sind in der Weise, daß ihre Endstücke (11) aufeinander zu gerichtet sind, wenn die Halteteile (1) an der Stirnfläche (2) des Werkzeugträgers (T) befestigt sind.

11. Bodenbearbeitungsmaschine nach einem der Ansprüche 1 bis 9, dadurch gekennzeichnet, daß die Halteteile (1) jeweils von dem zugehörigen Kreiselzinken (Z) um etwa 90° und ihre Endstücke (11) danach nochmals um etwa 90° abgebogen sind in der Weise, daß die Endstücke (11) zusammen mit den Halteelementen (3) und/oder dem Werkzeugträger (T) einen Formschluß in der Richtung der Längsseiten (12,13) der Halteteile (1) bewirken, wenn die Halteelemente (3) in den Haltestücken (4) angebracht sind.

12. Bodenbearbeitungsmaschine nach einem der Ansprüche 1 bis 9, dadurch gekennzeichnet, daß die Halteteile (1) jeweils von dem zugehörigen Kreiselzinken (Z) um etwa 90° und danach nochmals um etwa 180° abgebogen sind in der Weise, daß ihre Endstücke (11) voneinander weg weisen, wenn die Halteteile (1) an der Stirnfläche (2) des Werkzeugträgers (T) befestigt sind.

13. Bodenbearbeitungsmaschine nach einem der Ansprüche 1 bis 12, dadurch gekennzeichnet, daß die Halteelemente (3) jeweils als glatter, mittels Querstiften in den Haltestücken (4) arretierbarer, vorzugsweise zylindrischer Schaft (32) ausgebildet sind.

14. Bodenbearbeitungsmaschine nach einem der Ansprüche 1 bis 12, dadurch gekennzeichnet, daß die Halteelemente (3) als Schraubverbindung (31) ausgebildet sind.

15. Bodenbearbeitungsmaschine nach einem der Ansprüche 11 oder 14, dadurch gekennzeichnet, daß an den Halteelementen (3) ein Kopfstück, beispielsweise ein Bolzen- oder Schraubenkopf, ausgebildet ist, das an einem der Haltestücke (4) anliegt.

16. Bodenbearbeitungsmaschine nach einem der Ansprüche l bis 15, dadurch gekennzeichnet, daß an dem Halteteil (1) mindestens eine Durchbrechung (51a) vorgesehen ist, die ein komplementäres, an der Stirnfläche (2) des Werkzeugträgers (T) befindliches, vorzugsweise zapfenartiges Arretierstück (51b) untergreift, wenn die Halteelemente (3) in den Haltestücken (4) angebracht sind.

17. Bodenbearbeitungsmaschine nach einem der Ansprüche 1 bis 15, dadurch gekennzeichnet, daß an den Halteteilen (1) auf der dem Halteelement (3) zugewandten Haltefläche (14) quer zu den Längsseiten (12,13) des Halteteiles (1) verlaufende, erhabene, rippenartige, parallele Arretierstücke (52) vorgesehen sind, die an den Halteelementen (3) anliegen, wenn diese in den Haltestücken (4) angebracht sind.

18. Bodenbearbeitungsmaschine nach einem der Ansprüche 1 bis 10 oder 13 bis 15, dadurch gekennzeichnet, daß die Halteteile (1) jeweils von dem zugehörigen Kreiselzinken (Z) um etwa 90° abgebogen sind in der Weise, daß ihre Endstücke (11) gegeneinander gerichtet sind, wenn die Halteteile (1) an der Stirnfläche (2) des Werkzeugträgers (T) befestigt sind, und daß die Halteteile (1) parallel nebeneinander an der Stirnfläche (2) des Werkzeugträgers (T) angeordnet sind.

19. Bodenbearbeitungsmaschine nach einem der Ansprüche 1 bis 18, dadurch gekennzeichnet, daß in der Stirnfläche (2) des Werkzeugträgers (T) flache Ausnehmungen (21) vorgesehen sind, die von den Halteteilen (1) überdeckt werden in der Weise, daß diese bei hoher, an dem zugehörigen Kreiselzinken (Z) wirksamer Belastung elastisch in die jeweilige Ausnehmung (21) ausweichen können.

20. Bodenbearbeitungsmaschine nach Anspruch 9 und 18, dadurch gekennzeichnet, daß die Endstücke (11) der Halteteile (1) jeweils eine Durchbrechung (23) in dem Werkzeugträger (T) durchdringen und auf einer seiner Stirnfläche (2) abgewandten Rückfläche vorzugsweise federnd arretiert sind.

21. Bodenbearbeitungsmaschine nach einem der Ansprüche 1 bis 20, dadurch gekennzeichnet, daß zwischen den Halteteilen (1) und der Stirnfläche (2) des Werkzeugträgers (T) flache Federstücke (61) vorgesehen sind, die ein Ausweichen des jeweiligen Halteteiles (1) unter der Belastung des zugehörigen Kreiselzinkens (Z) zulassen.

22. Bodenbearbeitungsmaschine nach einem der Ansprüche 1 bis 21, dadurch gekennzeichnet, daß das Halteteil (1) an seinem Endstück (11) mit einem ersten, zylindrischen Halteelement (3) lagegesichert ist und ein weiterer, mit einem vorzugsweise konischen Schaft (33) versehener, von dem Endstück (11) abgerückter Haltebolzen (3) so vorgesehen ist, daß das Halteteil (1) bei Belastung des zugehörigen Kreiselzinkens (Z) bis zur durchgehenden Anlage an dem konischen Haltebolzen (3) verformbar, vorzugsweise tordierbar ist.

23. Bodenbearbeitungsmaschine nach einem der Ansprüche 1 bis 22, dadurch gekennzeichnet, daß die Halteelemente in Form von U-förmigen an ihren Enden mit Gewinden versehenen Schraubbändern (34) ausgebildet sind, die durch Bohrungen des Werkzeugträgers (T) greifen.

24. Werkzeugträger nach einem der Ansprüche 1 bis 23, dadurch gekennzeichnet, daß die Halteelemente (3) in Form von Haltehaken (35a, 35b) ausgebildet sind, die ihrerseits lösbar oder starr mit dem Werkzeugträger (T) verbunden sind.
